# EUROPEAN PATENT APPLICATION

(11) **EP 1 234 762 A2**
(43) Date of publication of application: **28.08.2002**
(21) Application number: 02380038.6
(22) Date of filing: 20.02.2002
(51) Int. Cl.: B64C 1/00, B64C 30/00

(54) **Aircraft lift arrangement**

(30) Priority: 27.02.2001 ES 200100457
(71) Applicant: Munoz Saiz, Manuel, E-28017 Madrid (ES)
(72) Inventor: Munoz Saiz, Manuel, E-28017 Madrid (ES)

(57) **Abstract**

An aircraft fuselage lift arrangement (1) comprising: an alongated constant central cross section fuselage having a longitudinal axis; an upper longitudinal axis, along the upper most portion of said fuselage, parallel to said longitudinal axis; a lower longitudinal axis, parallel to said longitudinal axis, along the length of the bottom of said fuselage; said fuselage having a nose portion (2) at one end and a tail portion (3) at its opposite end; said nose portion (2) of said fuselage (1) having an upwardly inclined front wall extending upwardly from said bottom of said fuselage to at least said upper longitudinal axis of said fuselage; said tail portion (3) of said fuselage (1) having a downwardly declining rear wall extending from said upper longitudinal axis to said bottom of said fuselage (1); said fuselage (1) having a main landing gear set backwards and higher.

## Description

Field of the Invention: On aircraft fuselages.

State of the Prior Art: This is a partial continuation of Spanish patent P9601904, September 6, 1996, that refers to improvement to aircraft and high speed vehicles.

### DESCRIPTION OF THE INVENTION.

The aircraft fuselage lift arrangement refers to alongated constant central cross section fuselages and consists of setting the aircraft fuselage nose in an upward inclination with a conical shape or with a flat wall on the bottom which, running from the underside of the fuselage, is inclined forward until meeting its upper zone; said inclined wall exploits the frontal incident air top create major lift and, because of the angle which it forms, frontal resistance is the same as that of a conventional aircraft fuselage; the tail is inclined downward with a conical shape or with a flat wall in the upper part running from the top of the fuselage and slope backwards as far as its bottom area, to exploit the suction of the rear air to create major lift and, because of its angle, the tail resistance is the same that of a conventional aircraft.

The oblique cones at the nose and tail are linked around their bases to the fuselage and inclined so that their more external generatrixes of said cones are in line with and form a continuation of said upper and lower longitudinal axis of said fuselage and whose cross-section is oval, vertically narrowed, laterally narrowed as well can adopt a curved or semicircular upper surface and a lower one flattened or vice versa, with the linkage rounded. In this way it is obtain lift bigger or smaller respectively than the one obtained with a circular cross-section.

The inclination degree of the nose and tail, and their bigger or smaller vertical flattened or lateral enlargement of the same, can be calculated so that at cruise speeds or of more length, the nose weight be equal to the lift, being necessary to counteract the weight at low speeds by means of a slight inclination of the fuselage or using small fins or wings.

The fuselage can adopt a cross-section equal to the nose or tail base or in the case of being different they have to be joined or linked by means of a smooth streamlined union or joint.

The fuselage can be slightly curved lenghtways with its concavity in the bottom.

A small portion of the nose and tail tips can be slightly curved downwards and upwards respectively.

The nose lower surface or the tail upper surface can be slightly curved or convex respectively, for both conic and flat noses or tails.

The nose and the tail or a portion of the same can be rotary or swinging at their bases and around an axis parallel to the transversal aircraft axis.

Only are necessary complementary small lifting wings, stabilizing fins or it can be enough with the tail stabilizer.

The total drag is smaller than the drag produced with aircraft wings.

Drawings do not show the engines, wings and flight controls fins.

### BRIEF DESCRIPTION OF THE DRAWINGS

Figure 1 shows a side schematic view of the fuselage of the invention.
Figure 2 to 6 and 9 show schematic cross section views of different noses, tails and fuselages with the lift arrangement of the invention.
Figure 7, 8, 10 and 11 show schematic side views of four fuselage variants.
Figure 12 and 13 show lateral partial schematic views of a nose and a tail respectively.

### DETAILED DESCRIPTION OF THE INVENTION

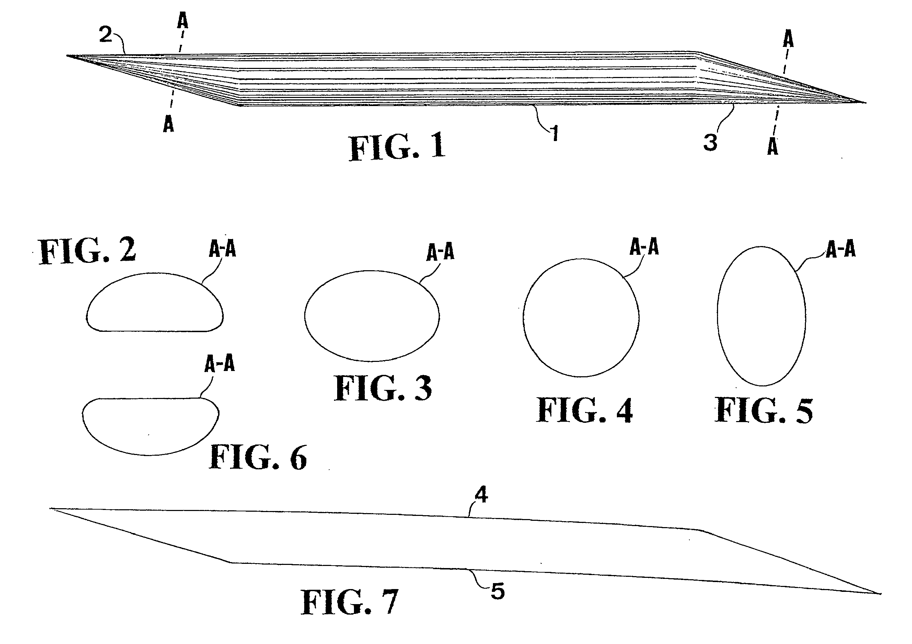

Figure 1 shows the central fuselage (1), the conical nose (2), the conical tail (3) and the cross-sections of the same (A-A).

Figure 2 shows the cross-section (A-A) which produces high lift in the nose.

Figure 3 shows the cross-section (A-A) in the nose or in the tail, which is oval and vertically narrowed, which produces more lift than the circular type.

Figure 4 shows the cross-section (A-A) of the circular type, related with patent P9601904.

Figure 5 shows the cross-section (A-A) in the nose or in the tail, which is oval and laterally narrowed,it produces the lowest lift.

Figure 6 shows the cross-section (A-A) which produces high lift in the tail.

Figure 7 shows a fuselage variant with their curved upper (4) and lower (5) surfaces.

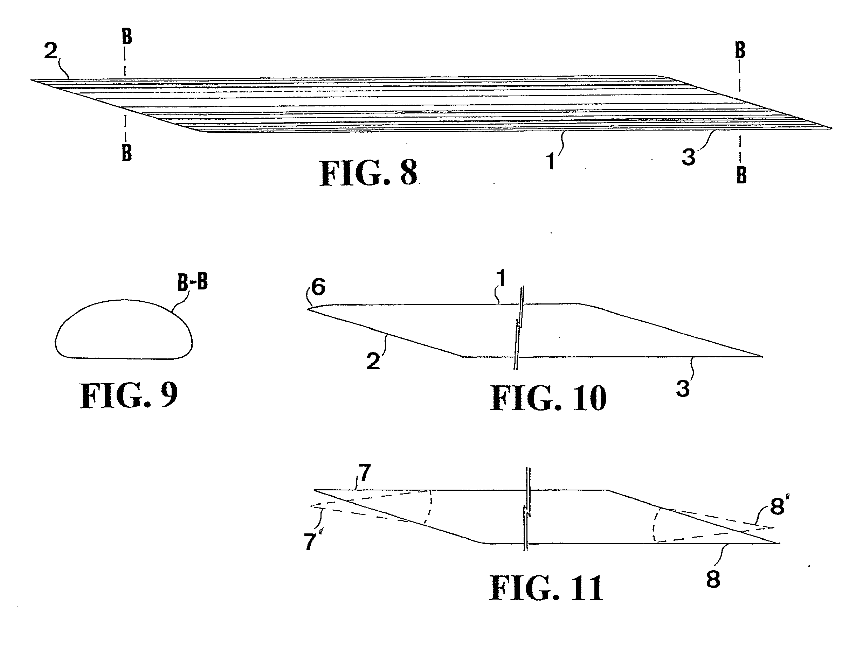

Figure 8 shows the central fuselage (1), the cylindrical nose with an inclined cut or truncated (2), the cylindrical tail with an inclined cut or truncated (3) and the cross-sections of the same (B-B).

Figure 9 shows the cross-section (B-B) which produces the highest lift in the nose and in the tail, in the tail this cross-section must be the one used in this figure but inverted.

Figure 10 shows the central fuselage (1), the nose (2) with a small portion of the same (6) slightly inclined downwards, and the tail (3).

Figure 11 shows the rotating or swing nose (7 and 7') and the rotating or swing tail (8 and 8').

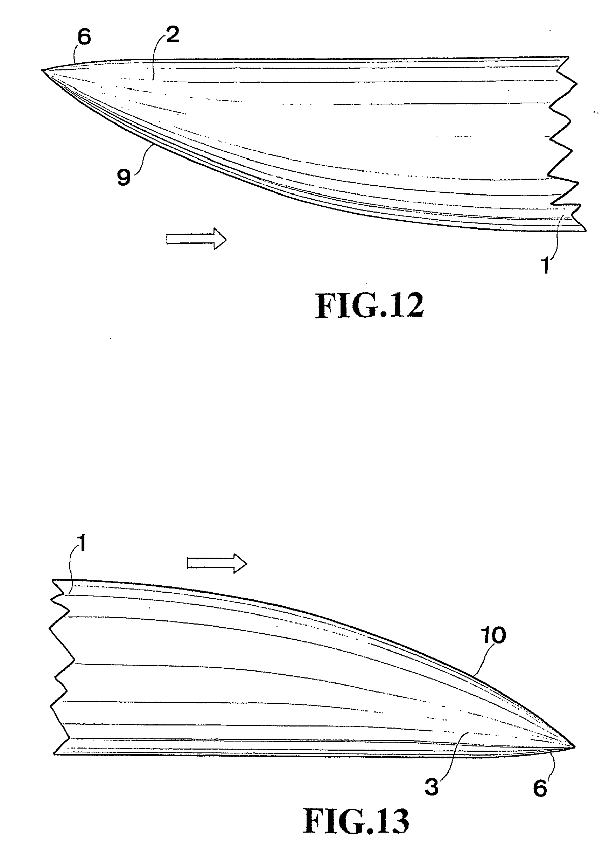

Figure 12 shows the central fuselage (1), the nose (2) with a small portion or tip of the same (6) slightly curved downwards and its convex surface (9).

Figure 13 shows the central fuselage (1), the tail (2) with a small portion or tip of the same (6) slightly curved upwards and its convex surface(10).

## Claims

1. An aircraft fuselage lift arrangement comprising:
an alongated constant central cross section fuselage having a longitudinal axis;
an upper longitudinal axis, along the upper most portion of said fuselage, parallel to said longitudinal axis;
a lower longitudinal axis, parallel to said longitudinal axis, along the length of the bottom of said fuselage;
said fuselage having a nose portion at one end and a tail portion at its opposite end;
said nose portion of said fuselage having an upwardly inclined front wall extending upwardly from said bottom of said fuselage to at least said upper longitudinal axis of said fuselage;
said tail portion of said fuselage having a downwardly declining rear wall extending from said upper longitudinal axis to said bottom of said fuselage;
said fuselage having a main landing gear set backwards and higher.

2. An aircraft fuselage lift arrangement according to claim 1, wherein are used two oblique cones at the nose and tail linked around their bases to the fuselage and inclined so that their more external generatrixes of said cones are in line with and form a continuation of said upper and lower longitudinal axis of said fuselage and whose cross-section is oval, vertically narrowed.

3. An aircraft fuselage lift arrangement according to claim 1, wherein are used two oblique cones at the nose and tail linked around their bases to the fuselage and inclined so that their more external generatrixes of said cones are in line with and form a continuation of said upper and lower longitudinal axis of said fuselage and whose cross-section is oval laterally narrowed.

4. An aircraft fuselage lift arrangement according to claim 1, wherein the fuselage adopts a curved or semicircular upper surface and a lower one flattened with the linkage rounded.

5. An aircraft fuselage lift arrangement according to claim 1, wherein the fuselage adopts a flattened upper surface and a lower one curved or semicircular with the linkage rounded.

6. An aircraft fuselage lift arrangement according to claim 1, wherein the fuselage adopts a cross-section equal to the nose or tail base.

7. An aircraft fuselage lift arrangement according to claim 1, wherein the fuselage adopts a cross-section different to the nose and tail, and are joined or linked by means of a smooth streamlined union or joint.

8. An aircraft fuselage lift arrangement according to claim 1, wherein the fuselage is slightly curved lenghtways with its concavity in the bottom.

9. An aircraft fuselage lift arrangement according to claim 1, wherein a small portion of the nose and tail tips are slightly curved downwards and upwards respectively and the nose lower surface and the tail upper surface are slightly curved or convex respectively, for both conic and flat noses or tails.

10. An aircraft fuselage lift arrangement according to claim 1, wherein the nose and the tail or a portion of the same are rotary or swinging at their bases and around an axis parallel to the transversal aircraft axis.
